# EUROPÄISCHE PATENTSCHRIFT

(11) **EP 0 745 836 B1**
(45) Veröffentlichungstag und Bekanntmachung des Hinweises auf die Patenterteilung: **16.09.1998**
(21) Anmeldenummer: 96105512.6
(22) Anmeldetag: 06.04.1996
(51) Int. Cl.: G01L 23/22, F02P 5/00, G01R 31/28

(54) **Vorrichtung zur Erzeugung eines synthetischen Signals für den Test von Klopfregelfunktionen**
Device for producing a synthetic signal for testing knocking control functions
Dispositif pour la production des signeaux de synthèse pour le test des fonctions de réglage de cliquetis

(30) Priorität: 31.05.1995 DE 19520033
(43) Veröffentlichungstag der Anmeldung: 04.12.1996
(73) Patentinhaber: Bayerische Motoren Werke Aktiengesellschaft, 80788 München (DE)
(72) Erfinder: Bayer, Michael, 80802 München (DE)
(74) Vertreter: Bullwein, Fritz

(56) Entgegenhaltungen:
- EP-A- 0 367 329
- WO-A-94/08135
- WO-A-95/08760
- US-A- 4 365 333
- US-A- 4 382 235
- US-A- 5 251 161

## Beschreibung

Die Erfindung bezieht sich auf eine Vorrichtung zur Erzeugung eines synthetischen Signals für den Test von Klopfregelfunktionen.

Für die Steuerung und Regelung verschiedener Brennkraftmaschinenfunktionen werden in Kraftfahrzeugen üblicherweise elektronische Steuergeräte eingesetzt. Mittels derartiger Steuergeräte wird beispielsweise als eine der Brennkraftmaschinenfunktionen die Klopfregelung durchgeführt. "Klopfen" oder "Klingeln", eine unkontrollierte Form der Verbrennung durch Selbstzündung bei einem zu frühen Zündzeitpunkt bzw. Zündwinkel, kann im Motor zu Schäden führen, wenn es zu häufig und zu heftig auftritt. Aus diesem Grund wird normalerweise der Zündzeitpunkt bzw. Zündwinkel so ausgelegt, daß er einen Sicherheitsabstand zur sog. Klopfgrenze aufweist. Aber auch ein zu später Zündwinkel ist unerwünscht, da er zur Erhöhung des Kraftstoffverbrauchs und damit zur Erhöhung der Abgasemissionen führt. Somit wird üblicherweise in den Brennkraftmaschinensteuergeräten während des Betriebs jeweils die Klopfgrenze erfaßt und der Zündwinkel auf diese geregelt. Zur Klopfregelung wird ein Klopfsensor verwendet, der die beim Klopfen auftretenden typischen Geräusche erfaßt, in elektrische Signale umwandelt und diese an das elektronische Brennkraftmaschinensteuergerät weitergibt. Der Anbauort des Klopfsensors ist üblicherweise so gewählt, daß das Klopfen aus jedem Zylinder unter allen Umständen sicher erkannt werden kann. Die Erkennung des Klopfens für jede Verbrennung in jedem Zylinder wird mittels des Vergleichs des Klopfsignals bzw. des vom Klopfsensor erfaßten Sensorsignals mit einem Referenzpegel ermittelt, der sich ständig automatisch an die Betriebsverhältnisse anpaßt. Wenn Klopfen auftritt, wird der Zündzeitpunkt bzw. der Zündwinkel zylinderselektiv um einen vorgegebenen Winkel nach "spät" verstellt. Dieser Vorgang wiederholt sich bei jeder als klopfend erkannten Verbrennung für jeden Zylinder. Tritt kein Klopfen mehr auf, wird der Zündzeitpunkt bzw. der Zündwinkel langsam in kleinen Schritten wieder nach "früh" bis auf seinen Kennfeldwert zurückgestellt. Da sich in einem Motor die jeweilige Klopfgrenze von Zylinder zu Zylinder unterscheidet und sich innerhalb des Betriebsbereichs stark ändert, ergibt sich an der Klopfgrenze für jeden Zylinder ein eigener Zündzeitpunkt.

Für die zylinderselektive Klopferkennung ist im Steuergerät üblicherweise für jeden Zylinder ein Klopffenster festgelegt, das brennkraftmaschinendrehzahlabhängig und frequenzabhängig für jeden Zylinder definiert wird.

Zur Entwicklung und zum Testen einer derartigen Klopfregelung in elektronischen Steuergeräten im Labor muß das üblicherweise vom Klopfsensor abgegebene Signal realitätsnah simuliert werden. Das im Fahrzeug entstehende und vom Klopfsensor üblicherweise erfaßte Signal besteht aus einem rauschähnlichen Grundgeräuschsignal, solange kein Klopfen auftritt, das bei Auftreten von Klopfen durch ein sinusähnliches gegenüber dem Grundgeräuschsignalpegel deutlich amplitudenerhöhtes Klopfsignal überlagert wird.

Zur Vereinfachung wird bisher (nicht von veröffentlicht) für den Test von Klopfregelfunktionen, insbesondere im Labor, anstelle des üblicherweise vom Klopfsensor erfaßten Signals ein synthetisches Signal eingesetzt, das als Grundgeräuschsignal lediglich ein fest definiertes Rechteckimpulspaket mit fest vorgegebenen verschiedenen Frequenzen und fest vorgegebenen niedrigen Amplituden und als Klopfsignal lediglich einen Rechteckimpuls mit fest vorgegebener Frequenz und fest vorgegebener hoher Amplitude verwendet. Mit einem derart vereinfachten synthetischen Signal ist nur ein sehr eingeschränkter statischer Test, insbesondere auch nur für einen Betriebspunkt, auf Funktionsfähigkeit der Klopferkennung und Klopfregelung möglich.

Es ist Aufgabe der Erfindung, eine Vorrichtung eingangs genannter Art zur Erzeugung eines synthetischen Signals derart zu verbessem, daß das synthetische Signal hinsichtlich eines üblicherweise in Brennkraftmaschinen auftretenden Klopfsensorsignals möglichst realitätsnah ist und sämtliche Funktionen in Verbindung mit einer Klopfregelung uneingeschränkt im Labor, d.h. ohne Vorliegen einer realen Brennkraftmaschine mit Klopfsensor und Zündwinkelspätverstellung, getestet werden können.

Diese Aufgabe wird durch die Merkmale des Patentanspruchs 1 gelöst. Erfindungsgemäß weist die Vorrichtung zum einen eine Grundgeräuschsignal-Erzeugungseinrichtung und eine Klopfsignal-Erzeugungseinrichtung, deren Ausgangssignale zu einem Gesamtpegel überlagerbar sind, sowie eine Betätigungseinrichtung zur Veränderung des Amplituden- und/oder des Frequenzverlaufs, z.B. des Frequenzspektrums, des Grundgeräuschsignals, des Klopfsignals und/oder des Gesamtsignals auf.

Das Grundgeräuschsignal wird vorzugsweise in Form eines Rauschsignals mit niedriger gemittelter Amplitude und das Klopfsignal in Form eines Sinussignals mit erhöhter gemittelter Amplitude erzeugt. Wesentlich ist die Veränderbarkeit der Amplitude und/oder der Frequenz bzw. des Amplituden- und/oder des Frequenzverlaufs, insbesondere des Klopfsignals, aber auch des Grundgeräuschsignals und/oder des Gesamtsignals. Vorzugsweise ist die Amplitude bzw. der Amplitudenverlauf manuell und die Frequenz bzw. der Frequenzverlauf automatisch in Abhängigkeit von beliebigen Betriebsparametem veränderbar.

Da üblicherweise der Test der Klopfregelfunktionen auch einen Test des Klopfsensors allgemein, d.h. unabhängig vom Auftreten eines Klopfens, umfaßt, ist vorzugsweise nicht nur die Amplitude des Klopfsignals sondern auch die des Grundgeräuschsignals veränderbar.

Da das Brennkraftmaschinensteuergerät üblicherweise eine Erfassung und Auswertung des Klopfsensorsignals lediglich innerhalb eines definierten sog. Klopffensters für jeden Zylinder vornimmt, wird beispielsweise das Klopfsignal lediglich für die Dauer des Klopffensters eines jeden Zylinders erzeugt.

Mit dieser erfindungsgemäßen Vorrichtung ist ein Test von Klopfregelfunktionen möglich, der an unterschiedliche Betriebsbedingungen oder Brennkraftmaschinenarten anpaßbar ist. Somit können unterschiedliche Steuergeräte für unterschiedliche Brennkraftmaschinen getestet werden. Die Steuergeräte für unterschiedliche Brennkraftmaschinen können sich beispielsweise durch die Schwellwertdefinitionen bezogen auf die Amplitude des Klopfsensorsignals zur Erkennung von Klopfen oder hinsichtlich der konstruktionsbedingten Klopfsignalfrequenzen unterscheiden. Auch kann durch die erfindungsgemäße Vorrichtung das synthetische Signal dahingehend angepaßt werden, auf welche Weise das Klopfsensorsignal im Steuergerät für Brennkraftmaschinen ausgewertet wird. Es gibt beispielsweise Steuergeräte, die die Referenzpegel als Schwellwerte zur Klopferkennung mit Maximalamplitudenwerten oder mit Amplitudenmittelwerten vergleichen. Entsprechend kann der Verlauf der Amplitude des Klopfsignals angepaßt werden. Zusammengefaßt ist mit der erfindungsgemäßen Vorrichtung ein sehr flexibles System für den Test von Klopfregelfunktionen unabhängig vom Typ der Brennkraftmaschine und den Auswerteverfahren der Steuergeräte geschaffen.

Eine vorteilhafte Weiterbildung der Erfindung ist der Gegenstand des Patentanspruchs 2.
Erfindungsgemäß ist die Veränderung der Amplitude und/oder der Frequenz bzw. des Amplituden- und/oder des Frequenzverlaufs in Abhängigkeit von einem der Drehzahl der Brennkraftmaschine proportionalen Signal bzw. in Abhängigkeit von dem Brennkraftmaschinendrehzahlsignal selbst vornehmbar.

Mit dieser erfindungsgemäßen Weiterbildung wird berücksichtigt, daß sich beispielsweise bei einigen Brennkraftmaschinen die Frequenz und/oder das Frequenzspektrum des Klopfsignals in Abhängigkeit von der Brennkraftmaschinendrehzahl verändert. Hierzu sind beispielsweise Steuergeräte geschaffen, die in Abhängigkeit von der Drehzahl der Brennkraftmaschine zur Auswertung des Klopfsignals zwischen verschiedenen Auswertefrequenzbandpässen umschaltet. Weiterhin wird üblicherweise in Steuergeräten eine brennkraftmaschinendrehzahlabhängige Schwellwertvorgabe zur Erkennung von Klopfen gewählt; d.h. je höher die Brennkraftmaschinendrehzahl ist, um so höher liegt auch die Schwelle der Amplitude oberhalb derer Klopfen erkannt wird. Diese erfindungsgemäße Weiterbildung berücksichtigt die Betriebsgröße, die auf das Entstehen und Auswerten eines Klopfsignals den größten Einfluß hat.

Eine weitere vorteilhafte Ausgestaltung der Erfindung ist der Gegenstand des Patentanspruchs 3.
Erfindungsgemäß ist die Veränderung der Amplitude und/oder der Frequenz des Klopfsignals zylinderselektiv vornehmbar.
Da bei jedem Zylinder unter gleichen Betriebsbedingungen unterschiedliche Klopfsignale entstehen können, und somit in den Steuergeräten eine zylinderselektive Klopfregelung vorgenommen wird, ist dementsprechend auch eine zylinderselektive Erzeugung des synthetischen Signals für den Test der Klopfregelfunktionen möglich. Somit ist erfindungsgemäß für jeden Zylinder ein eigenes Klopfsignal hinsichtlich der Amplitude und/oder der Frequenz erzeugbar. Vorzugsweise wird auch das zylinderselektive Klopfsignal lediglich innerhalb des definierten Klopffensters des jeweiligen Zylinders erzeugt. Es ist jedoch auch möglich, beispielsweise vom oberen Totpunkt des einen Zylinders bis zum oberen Totpunkt des nächsten Zylinders das zylinderselektive Klopfsignal auszugeben.

Somit ist eine optimale Anpassung des synthetischen Signals an die Realität und die vorgesehenen zylinderselektiven Klopfregelfunktionen möglich.

Eine weitere vorteilhafte Ausgestaltung der Erfindung ist der Gegenstand des Patentanspruchs 4.
Erfindungsgemäß ist die Häufigkeit des Klopfsignals innerhalb einer vorgegebenen Anzahl von Kurbelwellenumdrehungen oder von Arbeitstakten vorgebbar.
Die Klopfregelfunktionen innerhalb des Steuergeräts wirken sich insbesondere auf die Verstellung des Zündwinkels aus. Je häufiger ein Klopfsignal auftritt, um so stärker wird der Zündwinkel verstellt. Um diese vorgegebene Funktion zu prüfen, ist erfindungsgemäß die Vorrichtung derart ausgestaltet, daß auch die Häufigkeit des Klopfsignals, vorzugsweise zylinderselektiv, vorgebbar und veränderbar ist.
Auch durch diese erfindungsgemäße Weiterbildung ist ein noch umfangreicherer Test der Klopfregelfunktionen im Steuergerät möglich.

Eine weitere vorteilhafte Ausgestaltung der Erfindung ist der Gegenstand des Patentanspruchs 5.
Erfindungsgemäß ist der Beginn des Klopfsignals in Abhängigkeit von dem der Drehzahl der Brennkraftmaschine proportionalen Signal vorgebbar.
Da in den Steuergeräten die Klopffenster zur Auswertung des Klopfsignals in Abhängigkeit von dem der Drehzahl der Brennkraftmaschine proportionalen Signal beginnen, wird vorzugsweise bei der erfindungsgemäßen Vorrichtung das Klopfsignal auch erst mit Beginn des definierten Klopffensters erzeugt. Vorzugsweise ist hierzu das Klopfsignal möglichst realitätsnah in Form eines amplitudenmodulierten Sinussignalpakets mit anfänglich maximaler und anschließend stetig abnehmender Amplitude zu erzeugen. Je realitätsnaher das Klopfsignal erzeugt wird, um so umfassender kann der Test der Klopfregelfunktionen durchgeführt werden. Es gibt Steuergeräte, die zur Auswertung des Klopfsensorsignals lediglich die absolute Amplitude, z.B. die maximale Amplitude, auswerten, es gibt jedoch auch Steuergeräte, die den Mittelwert der Amplituden über das Gesamtsignal bilden. Vorallem im zweiten Fall ist ein realitätsnahes Klopfsignal besonders wünschenswert.

Die erfindungsgemäße Vorrichtung ermöglicht die Erzeugung eines synthetischen Signals, das an die Anforderungen, die durch das jeweilige Steuergerät vorgegeben sind, optimal flexibel anpaßbar ist.

In der Zeichnung ist ein Ausführungsbeispiel der Erfindung dargestellt. Es zeigt
- Fig. 1: schematisch ein mittels der erfindungsgemäßen Vorrichtung erzeugtes synthetisches Gesamtsignal über der Zeit und bezogen auf das der Drehzahl der Brennkraftmaschine proportionale Signal,
- Fig. 2: die Klopffenster innerhalb eines Brennkraftmaschinensteuergeräts für jeden Zylinder am Beispiel einer Vierzylinderbrennkraftmaschine und
- Fig. 3: ein mit der Betätigungseinrichtung verbundenes Bedienfeld zur manuellen Veränderung der Amplitude und der automatischen Veränderung der Frequenz des Grundgeräuschsignals und der zylinderselektiven Klopfsignale.

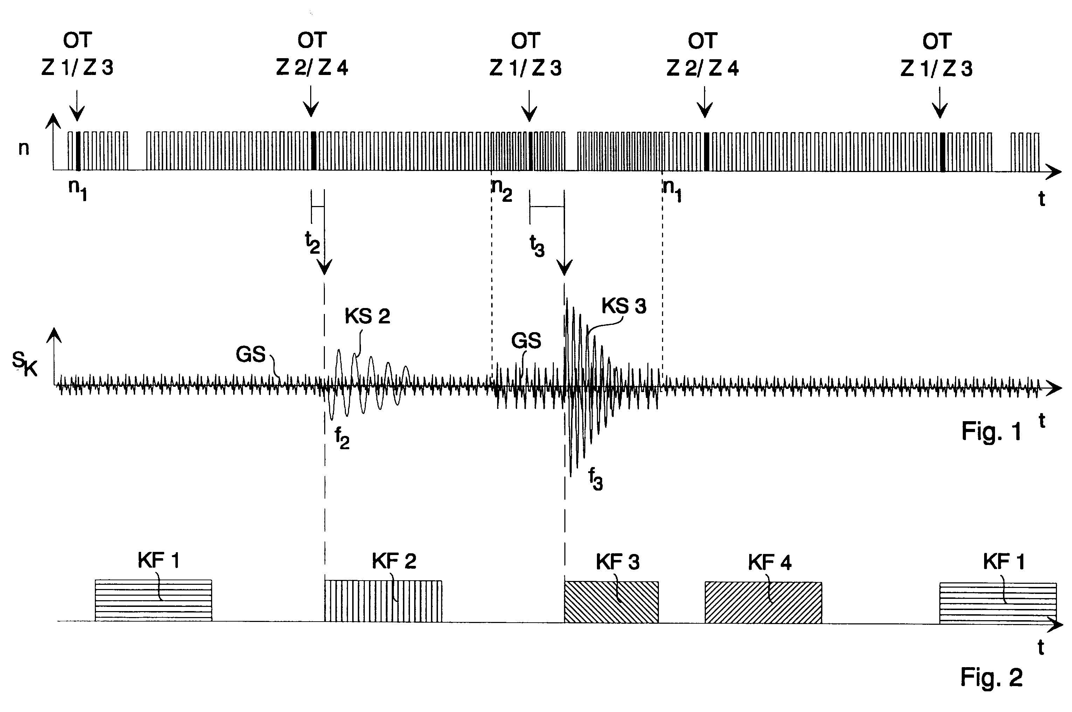

In Fig. 1 ist im oberen Diagramm ein der Drehzahl der Brennkraftmaschine proportionales Signal n über der Zeit t dargestellt. Das dargestellte Drehzahlsignal n ergibt sich aufgrund einer bekannten üblicherweise verwendeten induktiven Drehzahlerfassungsvorrichtung. Die dargestellten Impulse ergeben sich aus induktiv abgetasteten Zähnen einer mit der Kurbelwelle drehfest verbundenen Scheibe. Die schwarz aufgefüllten Impulse kennzeichnen jeweils den oberen Totpunkt OT des Zylinders Z1 und Z3 oder des Zylinders Z2 und Z4. Die dargestellten Lücken zwischen den Impulsreihen kennzeichnen jeweils eine Kurbelwellenumdrehung. Um diese Signalform zu erreichen, weist die mit Zähnen besetzte Drehscheibe eine Lücke auf.

Der Signalverlauf im oberen Diagramm der Fig. 1 weist drei Bereiche auf, die durch gestrichelte Linien zum unteren Diagramm hin gekennzeichnet sind. Im ersten Bereich liegt ein niedriger Drehzahlwert n₁, z.B. von 3000 1/min, vor. Bei der ersten gestrichelten Linie ändert sich die Drehzahl n auf einen höheren Wert n2, z.B. 6000 1/min. Im dritten Bereich wechselt der höhere Drehzahlwert n2 wieder auf den niedrigen Drehzahlwert n₁.

Im unteren Diagramm der Fig. 1 ist das synthetische Gesamtsignal S_{K} dargestellt, das sich aus einem weißen Rauschen als Grundgeräuschsignal GS und einem zeitweise überlagerten amplitudenmodulierten sinusförmigen Klopfsignal KS2 und KS3 zusammensetzt. Die Brennkraftmaschinensteuergeräte weisen üblicherweise einen hier nicht dargestellten Nockenwellensensor und einen weiteren Auswertealgorithmus auf, durch den die oberen Totpunkte OT der einzelnen Zylinder eindeutig erkennbar sind. In Fig. 2 ist den Signalen der Fig. 1 der Verlauf der den einzelnen Zylindern Z1 bis Z4 zugeordneten zylinderselektiven Klopfsignalfenster KF1 bis KF4 gegenübergestellt. Die Vorgabe dieser Klopffenster KF1 bis KF4 richtet sich nach den Algorithmen der jeweiligen Steuergeräte. Im vorliegenden Fall nach Fig. 2 hängt der Anfang und die Dauer der Klopffenster KF1 bis KF4 vom Drehzahlsignal n ab. Im vorliegenden Beispiel soll ein möglichst genaues synthetisches Klopfsensorsignal erzeugt werden.

Das in Fig. 1 (unteres Diagramm) dargestellte Gesamtsignal S_{K} zeigt, daß beim ersten Zylinder Z1 und beim vierten Zylinder Z4 kein Klopfsignal zum Testen der Klopfregelfunktionen für den Zylinder Z1 und Z4 simuliert wird. Dagegen wird für den Zylinder Z2 bei einem niedrigen Drehzahlwert n₁ und beim Zylinder Z3 bei einem hohen Drehzahlwert n₂ jeweils ein zylinderselektives Klopfsignal KS2 und KS3 erzeugt. Die Amplitude und die Frequenz f₂ des dem zweiten Zylinder zugeordneten Klopfsignals KS2 sind gegenüber der Frequenz f₃ und der Amplitude des dem dritten Zylinder zugeordneten Klopfsignals KS3 erniedrigt. Die Abhängigkeit der Frequenz f und der Amplitude des Klopfsignals KS von dem Drehzahlsignal n kann beispielsweise in einem in der erfindungsgemäßen Vorrichtung enthaltenen Speicher als Kennlinie hinterlegt werden. Aber auch das Grundgeräuschsignal GS kann in seiner Amplitude ebenfalls abhängig vom Drehzahlsignal n verändert werden. Ergänzend wird darauf hingewiesen, daß die Klopfsignale KS, z.B. KS2 und KS3, auch aus einem Frequenzspektrum bestehen können, das bei mindestens einer Frequenz einen ausgeprägten Peak aufweist. In diesem Fall ist vorzugsweise die Frequenz des Peaks bzw. der Peaks einstellbar.

Auch der Beginn t₂ und t₃ der Klopffenster KF2 und KF3 sind in Abhängigkeit vom Drehzahlsignal n dargestellt. Bei dem niedrigen Drehzahlwert n₁ beginnt das Klopffenster KF2 für den Zylinder Z2 bezogen auf den oberen Totpunkt OT des Zylinders Z2 zu dem früheren Zeitpunkt t₂, während dem gegenüber das Klopffenster KF3 für den Zylinder Z3 bei dem höheren Drehzahlwert n₂ bezogen auf den oberen Totpunkt OT des Zylinders Z3 zu dem späteren Zeitpunkt t₃ beginnt. Mit dem Beginn der jeweiligen Klopffenster KF2 und KF3 beginnen auch jeweils die Klopfsignale KS2 und KS3. Mit dem Ausführungsbeispiels nach Fig. 1 (unteres Diagramm) ist ein synthetisches Gesamtsignal S_{K} bestehend aus dem Grundgeräuschsignal GS und dem Klopfsignal KS dargestellt, das einem realen Klopfsensorsignal sehr nahe kommt.

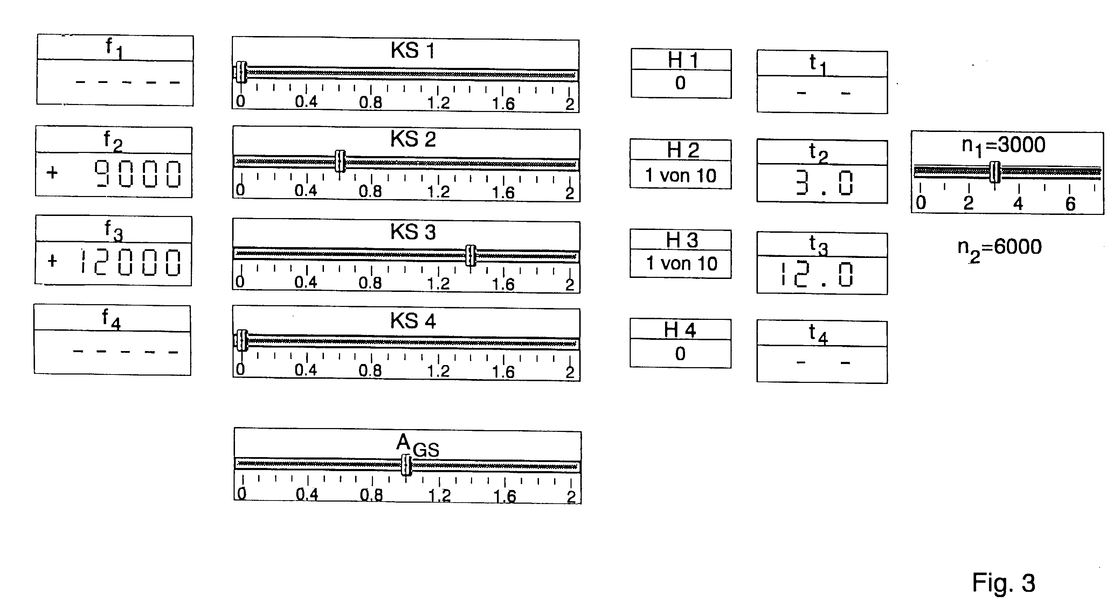

In Fig. 3 ist ein mögliches Bedienfeld für die Betätigungseinrichtung der erfindungsgemäßen Vorrichtung dargestellt. Mittels eines Schiebers können beispielsweise für die Zylinder Z1 bis Z4 die Amplituden der zylinderselektiven Klopfsignale KS1 bis KS4 manuell eingestellt werden. Im Beispiel nach Fig. 1 ist für den Zylinder Z1 und den Zylinder Z4 kein Klopfsignal KS1 und KS4 vorgesehen, daher befindet sich in Fig. 3 der obere und der untere Schieber für die Amplitude des Klopfsignals KS1 und KS4 auf Null. Dementsprechend sind auch die Frequenzen f₁ und f₄ sowie der jeweilige Beginn t₁ und t₄ der Klopffenster KF1 und KF4 ohne Anzeige eines Wertes. Dagegen wird für die Zylinder Z2 und Z3 die Frequenz f₂ von 9000 Hz und die Frequenz f₃ von 12000 Hz angezeigt. Auch der Beginn t₂ des Klopffensters KF2 und somit der Beginn des Klopfsignals KS2 sowie der Beginn t₃ des Klopffensters KF3 und damit des Klopfsignals KS3 sind am Bedienfeld nach Fig.3 mit den Werten 3,0 sowie 12,0 angezeigt. Diese Werte können sich beispielsweise auf die Anzahl der Zähne oder den Kurbelwellenwinkelabstand vom oberen Totpunkt OT des Zylinders Z2 sowie des Zylinders Z3 beziehen.

Darüber hinaus ist ein Schieberegler für die Einstellung der Amplitude A_{GS} des Grundgeräuschsignals GS sowie ein Schieberegler zur Einstellung der Drehzahl n der Brennkraftmaschine vorgesehen. Im dargestellten Fall liegt gerade der Drehzahlwert n₁ von z.B. 3000 Umdrehungen vor.

Weiterhin ist in Fig. 3 mit H1 bis H4 die Häufigkeit H des Klopfsignals KS1 bis KS4 innerhalb einer vorgegebenen Anzahl von Arbeitstakten vorgebbar. Beispielsweise können im dargestellten Fall die Klopfsignale KS2 und KS3 jeweils einmal innerhalb von 10 Arbeitstakten oder 20 Kurbelwellenumdrehungen auftreten. Die Häufigkeiten H1 und H4 für die Zylinder Z1 und Z4 haben den Wert Null, da hierfür in Fig. 1 kein Klopfsignal vorgesehen ist.

Mit dieser erfindungsgemäßen Vorrichtung ist eine sehr flexible und anpaßbare Erzeugung eines synthetischen Signals anstelle eines Klopfsensorsignals möglich.

## Patentansprüche

1. Vorrichtung zur Erzeugung eines synthetischen Signals für den Test von Klopfregelfunktionen in Brennkraftmaschinensteuergeräten von Kraftfahrzeugen, wobei eine Grundgeräuschsignal-Erzeugungseinheit und eine Klopfsignal-Erzeugungseinheit vorgesehen sind, deren Ausgangssignale zu einem Gesamtsignal (S_{K}) überlagerbar sind, sowie eine Betätigungseinrichtung zur Veränderung des Amplituden- und/oder des Frequenzverlaufs (f) des Grundgeräuschsignals (GS), des Klopfsignals (KS) und/oder des Gesamtsignals (S_{K}).

2. Vorrichtung nach Patentanspruch 1, wobei die Veränderung des Amlituden- und/oder des Frequenzverlaufs (f) in Abhängigkeit von einem der Drehzahl der Brennkraftmaschine proportionalen Signal (n) vornehmbar ist.

3. Vorrichtung nach Patentanspruch 1 oder 2, wobei die Veränderung des Amplitudenverlaufs (KS1, KS2, KS3, KS4) und/oder des Frequenzverlaufs (f) des Klopfsignals (KS) zylinderselektiv vornehmbar ist.

4. Vorrichtung nach einem der Patentansprüche 1 bis 3, wobei die Häufigkeit (H) des Klopfsignals (KS) innerhalb einer vorgegebenen Anzahl von Arbeitstakten oder Kurbelwellenumdrehungen vorgebbar ist.

5. Vorrichtung nach einem der Patentansprüche 1 bis 4, wobei der Beginn (t₁, t₂, t₃, t₄) des Klopfsignals (KS; KS1, KS2, KS3, KS4) von der Klopfsignal-Erzeugungseinheit in Abhängigkeit von dem der Drehzahl der Brennkraftmaschine proportionalen Signal (n) vorgebbar ist.

## Claims

1. A device for generating a synthetic signal for testing knocking control functions in engine control devices for motor vehicles, wherein a basic noise signal generator and a knocking signal generator, whose output signals can be superposed to form a total signal (S_{K}) are provided together with an actuator for altering the amplitude curve and/or the frequency curve (f) of the basic noise signal (GS), the knocking signal (KS) and/or the total signal (S_{K}).

2. A device according to claim 1, wherein the amplitude curve and/or the frequency curve (f) is altered in dependence on a signal (n) proportional to the speed of the engine.

3. A device according to claim 1 or 2, wherein the amplitude curve (KS1, KS2, KS3, KS4) and/or the frequency curve (f) of the knocking signal (KS) can be altered selectively for each cylinder.

4. A device according to any of claims 1 to 3, wherein the frequency (H) of the knocking signal (KS) can be preset within a predetermined number of work cycles or crankshaft revolutions.

5. A device according to any of claims 1 to 4, wherein the beginning (t₁, t₂, t₃, t₄) of the knocking signal (KS; KS1, KS2, KS3, KS4) can be preset by the knocking signal generator in dependence on the signal (n) proportional to the engine speed.

## Revendications

1. Dispositif pour générer un signal de synthèse servant à la vérification des fonctions de réglage de cliquetis dans des appareils de commande de moteurs à combustion interne de véhicules automobiles, selon lequel
- une unité générant un signal de bruit de base et une unité générant un signal de cliquetis, et dont les signaux de sortie sont combinés à un signal global (S_{K}) ainsi qu'une installation d'actionnement pour modifier l'amplitude et/ou la forme de la fréquence (f) du signal de bruit de base (GS), du signal de cliquetis (KS) et/ou du signal global (S_{K}).

2. Dispositif selon la revendication 1,
caractérisé en ce que
la variation de la courbe d'amplitude et/ou de fréquence (f) se fait en fonction d'un signal (n) proportionnel à la vitesse de rotation du moteur à combustion interne.

3. Dispositif selon les revendications 1 ou 2,
caractérisé en ce que
la variation des courbes d'amplitude (KS1, KS2, KS3, KS4) ou des courbes de fréquence (f) du signal de cliquetis (KS) se font de manière sélective par cylindre.

4. Dispositif selon l'une des revendications 1 à 3, selon lequel
- la fréquence (H) du signal (KS) est prédéterminée dans un nombre prédéterminé de cycles de travail ou de rotations du vilebrequin.

5. Dispositif selon l'une des revendications 1 à 4, dans lequel
- le début (t₁, t₂, t₃, t₄) du signal de tête (KS, KS1, KS2, KS3, KS4) est modifié par l'unité générant le signal de cliquetis en fonction du ou des signaux proportionnels à la vitesse de rotation du moteur à combustion interne.
